# EUROPEAN PATENT SPECIFICATION

(11) **EP 3 486 307 B1**
(45) Date of publication and mention of the grant of the patent: **23.12.2020**
(21) Application number: 18188678.9
(22) Date of filing: 13.08.2018
(51) Int. Cl.: C12C 11/00, C12C 13/10, C12G 1/036

(54) **FERMENTER**
FERMENTER
FERMENTEUR

(30) Priority: 15.11.2017 KR 20170152577
(43) Date of publication of application: 22.05.2019
(73) Proprietor: LG Electronics Inc., Seoul 07336 (KR)
(72) Inventor: HONG, Jinpyo, 08592 Seoul (KR); LEE, Daewoong, 08592 Seoul (KR)
(74) Representative: Vossius & Partner Patentanwälte Rechtsanwälte mbB

(56) References cited:
- EP-A1- 3 246 385
- WO-A1-2011/017777
- GB-A- 191 001 224
- US-A- 5 802 956

## Description

The present disclosure relates to a fermenter, and more particularly, to a fermenter for making a fermented beverage. The invention is defined by the claims.

Beverages are collectively referred to as drinkable liquids such as alcohol or tea. For example, beverages may be divided into various categories such as water (a beverage) to solve thirst, juice beverages with unique flavor and taste, refreshing beverages giving refreshing sensation, favorite beverages with an arousal effect, or alcoholic beverages with an alcohol effect.

Representative examples of such a beverage are beer. The beer is an alcoholic beverage made by making juice of malt sprouting from barley, filtering the juice, adding hop, and fermenting the juice by using the yeast.

Consumers may purchase ready-made products made and sold by a beer maker or home beer (or handmade beer) made by directly fermenting beer ingredients at home or in a bar.

House beer may be made in a variety of types rather ready-made products and may be made to suit the consumer's taste.

The ingredients for making beer may include water, malt, hop, yeast, flavoring additives, and the like.

The yeast, which is called leaven, may be added to malt to ferment the malt and help to produce alcohol and carbonic acid.

The flavor additives are additives that enhance the taste of beer, such as fruit, syrup, vanilla beans, and the like.

Generally, the house beer may include three stages, namely, a wort production step, a fermentation step, and an aging step, and it may take about two to three weeks from the wort production step to the aging step.

It is important for the house beer to maintain an optimum temperature during the fermentation stage, and the more the beer is more simply made, the more user's convenience is improved.

In recent years, a beverage maker capable of easily making house beer in a home or a bar has been gradually used, and it is preferable that such a beverage maker safely and easily makes beer.

EP 3 246 385 A1 and US 5 802 956 A disclose devices for home brewing.

The invention is defined by the appended independent claim, and preferred aspects of the invention are defined by the appended dependent claims. Embodiments provide a fermenter in which a gas generated during a fermentation process is easily discharged.

According to the disclosure in the present description, there is provided a fermenter including: a fermentation container having a fermentation space in which a beverage is fermented and a first gas passage communicating with the fermentation space; and a fermentation lid opening and closing the fermentation container and having a second gas passage. When the fermentation lid closes the fermentation container, a gas chamber communicating with each of the first gas passage and the second gas passage may be provided between the fermentation container and the fermentation lid.

The gas chamber may have a sectional area less than that of each of the first gas passage and the second gas passage.

The fermenter may further include a sealing preventing a gas within the gas chamber from leaking between the fermentation lid and the fermentation container. The sealing may be provided on at least one of the fermentation lid and the fermentation container.

A plurality of first gas passages may be provided in the fermentation container.

A first main passage communicating with the fermentation space may be further provided in the fermentation container. The first main passage may be spaced apart from the first gas passage.

when the fermentation lid closes the fermentation container, a second main passage communicating with the first main passage may be further provided in the fermentation lid. The second main passage may be spaced apart from the second gas passage.

Each of the first main passage and the second main passage may have a sectional area greater than that of each of the first gas passage and the second gas passage and less than that of the gas chamber.

The fermenter may further include a sealing preventing a fluid flowing to the main passage from leaking between the first main passage and the second main passage. The sealing may be provided on at least one of the fermentation lid and the fermentation container.

The first gas passage may be disposed between the first main passage and an outer circumference of the fermentation container.

Each of the second gas passage and the second main passage may include a vertical that is lengthily disposed in a vertical direction, and the vertical part of the second gas passage may be disposed between the vertical part of the second main passage and an outer circumference of the fermentation lid.

The fermentation lid may include an outer lid seated on the fermentation container; and an inner lid rotatably disposed with respect to the outer lid and provided with the second gas passage.The gas chamber may be provided between the fermentation container and the inner lid. A locking part coupled to the fermentation container when the inner lid rotates in one direction may be provided on the inner lid.

The fermentation container may include a fermentation tank having an opening opened and closed by the fermentation lid; and a beverage making pack having the fermentation space and the first gas passage and inserted into the fermentation tank through the opening.The gas chamber may be provided between the beverage making pack and the fermentation lid.

A grasp part protruding upward may be disposed on the beverage making pack, and an inner space of the grasp part may be provided in the gas chamber or communicate with the gas chamber.

When the fermentation lid closes the opening, a buffer space may be defined between the beverage making pack and the fermentation lid, and the buffer space may be defined outside the grasp part and spaced apart from the gas chamber.

The fermenter may further include: a first sealing preventing a gas within the gas chamber from leaking to the buffer space; and a second sealing preventing a gas within the buffer space from leaking to the outside. Each of the first sealing and the second sealing may be disposed on at least one of the beverage making pack and the fermentation lid.

A first main passage spaced apart from the first gas passage may be further provided in the beverage making pack, a second main passage spaced apart from the second gas passage may be further provided in the fermentation lid, and when the fermentation lid closes the opening, the first main passage and the second main passage may communicate with each other.
Fig. 1 is a cross-sectional view illustrating a state in which a beverage making pack is not accommodated in a fermentation tank in a fermenter according to an embodiment of the invention .
Fig. 2 is a cross-sectional view illustrating a state in which a fermentation lid of the fermenter of Fig. 1 is opened, and the beverage making pack is accommodated in the fermentation tank according to a first example relevant to the invention.
Fig. 3 is a view illustrating a flow of a gas discharged through a gas passage when the fermentation lid of the fermenter of Fig. 2 is closed.
Fig. 4 is a cross-sectional view illustrating a state in which a fermentation lid of a fermenter is opened according to a second example relevant to the invention.
Fig. 5 is a view illustrating a flow of a fluid introduced through a main passage and a flow of a gas discharged through a gas passage when the fermentation lid of the fermenter of Fig. 4 is closed.
Fig. 6 is a view illustrating a flow of a beverage dispensed through the main passage when the fermentation lid of the fermenter of Fig. 4 is closed.
Fig. 7 is a cross-sectional view illustrating a state in which a fermentation lid of a fermenter is opened according to a third example relevant to the invention.
Fig. 8 is a view illustrating a flow of a gas discharged through a gas passage when the fermentation lid of Fig. 7 is closed and locked.
Fig. 9 is a transverse cross-sectional view illustrating a state in which the fermentation lid of a fermenter of Fig. 7 is unlocked.
Fig. 10 is a transverse cross-sectional view illustrating a state in which the fermentation lid of the fermenter of Fig. 7 is locked.
Fig. 11 is a cross-sectional view illustrating a state in which a fermentation lid of a fermenter is opened according to a first embodiment of the invention.
Fig. 12 is a view illustrating a flow of a gas discharged through a gas passage when the fermentation lid of the fermenter of Fig. 11 is closed.
Fig. 13 is a cross-sectional view illustrating a state in which a fermentation lid of a fermenter is opened according to a second embodiment of the invention.
Fig. 14 is a view illustrating a flow of a fluid introduced through a main passage and a flow of a gas discharged through a gas passage when the fermentation lid of the fermenter of Fig. 13 is closed.
Fig. 15 is a view illustrating a flow of a beverage dispensed through the main passage when the fermentation lid of the fermenter of Fig. 13 is closed.

Hereinafter, detailed embodiments of the present disclosure will be described in detail with reference to the accompanying drawings.

Although beer is exemplified as a beverage made by using a fermenter in this specification, a kind of beverage is not limited to the beer that is capable of being made by using the fermenter. For example, various kinds of beverages may be made through the fermenter according to embodiments.

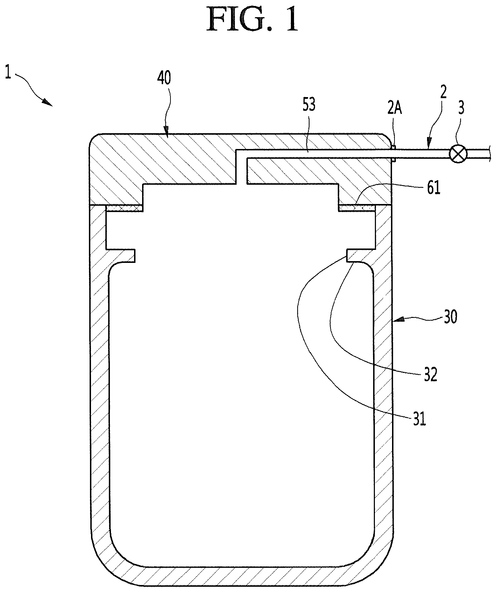

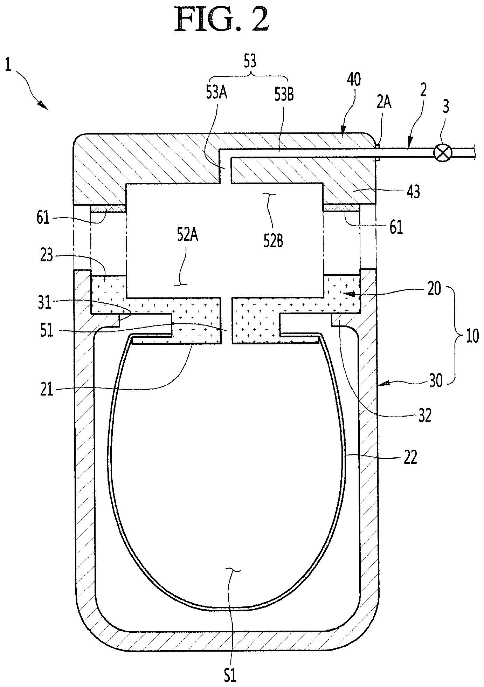

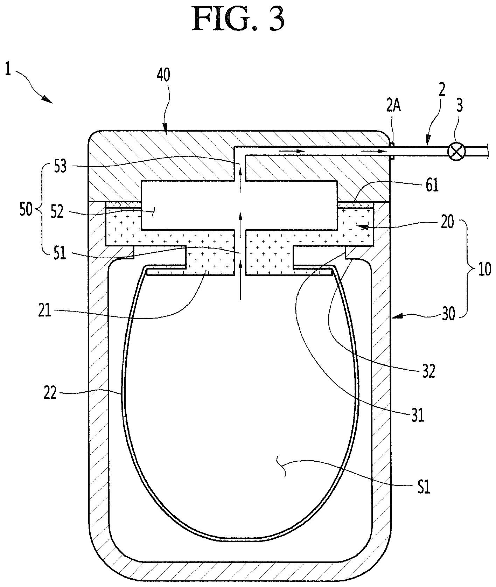

Fig. 1 is a cross-sectional view illustrating a state in which a beverage making pack is not accommodated in a fermentation tank in a fermenter according to commonembodiments of the invention, Fig. 2 is a cross-sectional view illustrating a state in which a fermentation lid of the fermenter of Fig. 1 is opened, and the beverage making pack is accommodated in the fermentation tank according to a first example relevant to the invention, and Fig. 3 is a view illustrating a flow of a gas discharged through a gas passage when the fermentation lid of the fermenter of Fig. 2 is closed.

Hereinafter, a fermenter according to the first example relevant to the invention will now be described with reference to Figs. 1 to 3.

The fermenter 1 includes a fermentation container 10 and a fermentation lid 40.

A fermentation space S1 in which a beverage is fermented and at least one first gas passage 51 communicating with the fermentation space S1 is provided in the fermentation container 10.

In more detail, the fermentation container 10 includes a beverage making pack 20 and a fermentation tank 30. An opening 31 is defined in the fermentation tank 30, and the beverage making pack 20 is inserted through the opening 31. The fermentation space S1 and the first gas passage 51 are provided in the beverage making pack 20.

In more detail, the beverage making pack 20 may include a pack body 21 and a pack container 22.

The pack body 21 may be supported by a support part 32 provided on the fermentation tank 30.

The pack container 22 may be attached to the pack body 21 and be accommodated in the fermentation tank 30. The pack container 22 may be made of a soft material and be adjustable in volume so that the pack container 22 is easily inserted into the opening 31 of the fermentation tank 30. However, this example is not limited thereto. For example, the pack container 22 may be made of a pet material.

An inner space of the pack container 22 may include the fermentation space S1, and the first gas passage 51 communicating with the fermentation space S1 may be provided in the pack body 21.

The fermentation lid 40 opens and closes the fermentation container 10. The fermentation lid 40 may be disposed on an upper portion of the fermentation container 10 to open and close the fermentation container 10.

The fermentation lid 40 opens and closes the opening 31 of the fermentation tank 30 together with the beverage making pack 20.

Each of the fermentation container 10 and the fermentation lid 40 may have an approximately cylindrical shape, but is not limited thereto.

The fermentation lid 40 and the fermentation container 10 are not limited in connection manner therebetween. For example, the fermentation lid 40 may be connected to the fermentation container 10 through a hinge or be separably connected to the fermentation container 10.

A second gas passage 53 is provided in the fermentation lid 40.

The second gas passage 53 may include a vertical part 53A lengthily disposed in a vertical direction and a horizontal part 53B lengthily disposed in a horizontal direction when the fermentation lid 40 closes the fermentation container 10. A gas within a gas chamber 52 may be guided to successively pass through the vertical part 52A and the horizontal part 52B.

However, this example is not limited thereto. For example, the second gas passage 53 may vary in shape as necessary. For example, the second gas passage 53 may have a curved tube shape or be provided with only the vertical part.

The second gas passage 53 may extend to the outside of the fermenter 1 or be provided in only the inside of the fermentation lid 40. In addition, the second gas passage 53 may be connected to a separate external gas passage 2. Hereinafter, a structure in which the second gas passage 53 is connected to the external gas passage will be described as an example.

A gas passing through the second gas passage 53 may be introduced into an external gas passage 2, and the external gas passage 2 may guide the introduced gas up to a discharge position.

A gas discharge valve 3 may be provided in the external gas passage 2. The gas discharge valve 3 may open and close the external gas passage 2 or be adjusted in degree of opening to adjust the discharge of the gas.

A connection part 2A between the external gas passage 2 and the second gas passage 53 may be disposed on an outer circumference of the fermentation lid 40 as illustrated in Figs. 1 to 3. However, this example is not limited thereto. For example, the external gas passage 2 may be inserted into the fermentation lid 40 and connected to the second gas passage 53. In this case, the connection part 2A between the external gas passage 2 and the second gas passage 53 may be disposed inside the fermentation lid 40.

When the fermentation lid 40 closes the fermentation container 10, the gas chamber 52 is provided between the fermentation container 10 and the fermentation lid 40. The gas chamber 52 communicates with each of the first gas passage 51 provided in the fermentation container 10 and the second gas passage 53 provided in the fermentation lid 40.

The first gas passage 51, the gas chamber 52, and the second gas passage 53 constitutes a gas passage 50 through which the gas generated in the fermentation space S1 is discharged to the outside of the fermenter 1. In more detail, the gas generated in the fermentation space S1 during the fermentation process may be introduced into the gas chamber 52 through the first gas passage 51, and the gas introduced into the gas chamber 52 is discharged to the outside of the fermenter 1 through the second gas passage 53.

In order to appropriately maintain an internal pressure of the fermentation space S1 during the fermentation process, each of the first gas passage 51 and the second gas passage 53 may have a sufficient small sectional area. The gas chamber 52 has a sectional area greater than that of each of the first gas passage 51 and the second gas passage 53. Here, each of the sectional areas may represent a sectional area that is perpendicular to a flow direction of the gas.

Thus, although the first gas passage 51 and the second gas passage 53 are not disposed at positions that accurately correspond to each other, the gas generated in the fermentation space S1 is easily discharged along the gas passage 50. Also, when the first gas passage 51 is provided in plurality, the gas guided to the first gas passage 51 may be concentrated into the gas chamber 52 and then guided to the second gas passage 53.

A hollow part or a recess part may be defined in at least one of the beverage making pack 20 and the fermentation lid 40, and inner spaces 52A and 52B of the hollow part or the recess part may define the gas chamber 52. Hereinafter, a structure in which hollow parts 23 and 43 are respectively defined in the beverage making pack 20 and the fermentation lid 40 will be described as an example for convenience of description.

The container-side hollow part 23 is defined in the beverage making pack 20, and a lid-side hollow part 43 is defined in the fermentation lid 40. The container-side hollow part 23 protrudes upward, and the lid-side hollow part 43 protrudes downward. The container-side hollow part 23 and the lid-side hollow part 43 may be disposed at positions corresponding to each other.

When the fermentation lid 40 closes the fermentation container 10, the container-side hollow part 23 and the lid-side hollow part 43 may come into contact with each other or overlap each other in the vertical direction. However, this example is not limited thereto. When the fermentation lid 40 closes the fermentation container 10, an outer circumferential surface of the lid-side hollow part 43 and an inner circumferential surface of the container-side hollow part 23 may come into contact with each other.

When the fermentation lid 40 closes the fermentation container 10, the inner space 52A of the container-side hollow part 23 and the inner space 52B of the lid-side hollow part 43 may define the gas chamber 52 together with each other.

The fermenter 1 may further include a sealing 61 for preventing the gas within the gas chamber 52 from leaking between the fermentation lid 40 and the fermentation container 10.

The sealing 61 may be made of a material having elasticity such as rubber.

The sealing 61 may be provided on at least one of the fermentation lid 40 and the fermentation container 10. In more detail, the sealing 61 may be provided on at least one of the container-side hollow part 23 and the lid-side hollow part 43.

When the fermentation lid 40 closes the fermentation container 10, the sealing 61 may be compressed between the fermentation lid 40 and the fermentation container 10 to improve a sealing effect.

Since the sealing 61 is provided, the gas introduced into the gas chamber 52 through the first gas passage 51 may be completely guided to the second gas passage 53.

Hereinafter, an operation of the fermenter 1 according to this example will be described.

A user may open the fermentation lid 40 to put the beverage making pack 20 into the opening 31 of the fermentation tank 30. Here, a fermentation material may be contained in the beverage making pack 20. Thereafter, the user may close the fermentation lid 40 to close the fermentation container 10 and start the fermentation.

As the fermentation progresses, the gas is generated in the fermentation space S1 within the beverage making pack 20. Thus, the inner pressure of the fermentation space S1 gradually increases to expand the pack container 22 and thereby to reach an appropriate level of inner pressure.

If the gas is continuously generated even though the inner pressure of the fermentation space S1 reaches the appropriate level, the gas is introduced into the gas chamber 52 through the first gas passage 51, and the gas within the gas chamber 52 is discharged to the outside of the fermenter 1 through the second gas passage 53.

If the second gas passage 53 is connected to the external gas passage 2, when a gas discharge valve 3 is opened, the gas passing through the second gas passage 53 may be guided to the external gas passage 2 and then discharged.

As a result, the inner pressure of the fermentation space S1 may be maintained at the appropriate level so that the fermentation progresses. Also, the gas discharge valve 3 may be adjusted to control the inner pressure.

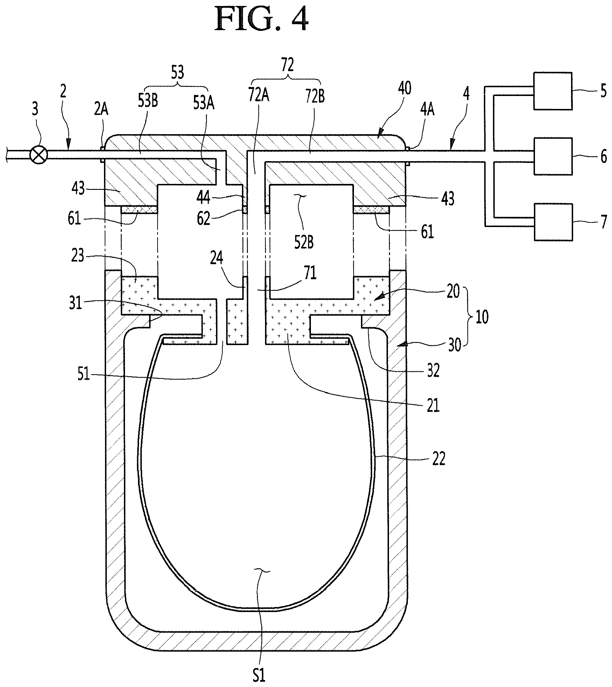

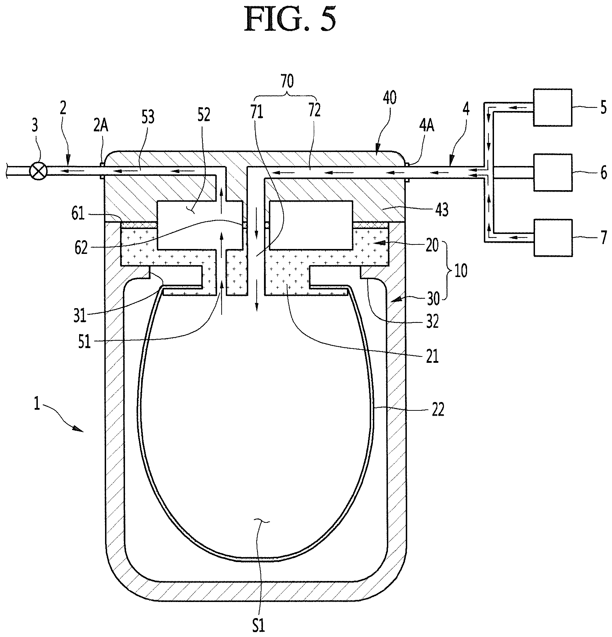

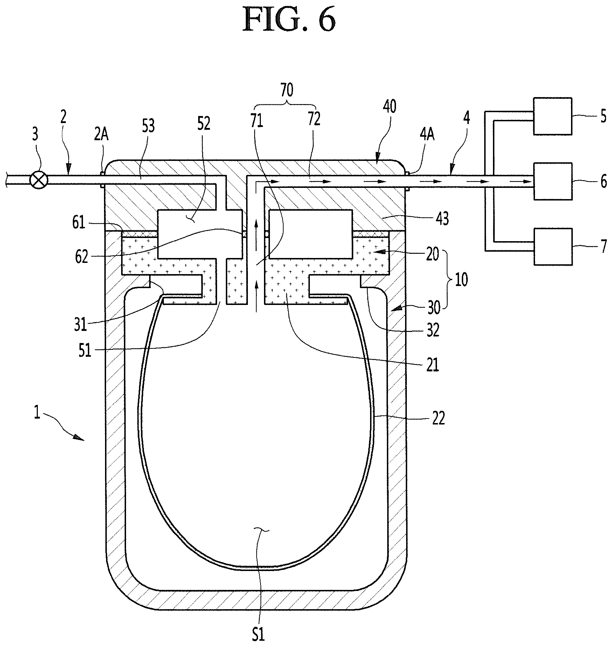

Fig. 4 is a cross-sectional view illustrating a state in which a fermentation lid of a fermenter is opened according to a second example relevant to the invention, Fig. 5 is a view illustrating a flow of a fluid introduced through a main passage and a flow of a gas discharged through a gas passage when the fermentation lid of the fermenter of Fig. 4 is closed, and Fig. 6 is a view illustrating a flow of a beverage dispensed through the main passage when the fermentation lid of the fermenter of Fig. 4 is closed.

Hereinafter, a fermenter according to the second example will be described with reference to Figs. 4 to 6. Also, the fermenter according to this example is the same as that according to the first example except for a main passage 70 and constituents related to the main passage 70, and thus, their duplicated description will be omitted, and differences will be mainly described.

As compared with the abovementioned first example, a fermenter 1 according to this example may further include the main passage 70.

One portion of the main passage 70 may be provided in a fermentation container 10 to communicate with a fermentation space S1, and the other portion may be provided in the fermentation lid 40.

The main passage 70 may guide a fluid introduced from the outside of the fermenter 1 to the fermentation space S1. For example, when a beverage made in the fermenter is beer, the fluid may be water, air, wort, a mixture of water and malt, or a mixture of water and additives (yeast, hop, oil, and the like).

Also, the main passage 70 may guide the fluid of the fermentation space S1 to the outside of the fermenter 1. For example, the fluid may be a beverage such as the completely made beer.

In order to easily dispense the beverage, the main passage 70 may be connected to a tube (not shown) that extend downward to approach a bottom surface of the inside of the beverage making pack 20.

That is, the main passage 70 may allow the fluid to flow in both directions.

In order to allow the fluid to smoothly flow, the gas chamber 52 has a sectional area greater than that of each of a first gas passage 51 and a second gas passage 53. In more detail, each of a first main passage 71 and a second main passage 72 may have a sectional area greater than that of each of the first gas passage 51 and the second gas passage 53.

The main passage 70 may pass through a gas chamber 52. That is, the first main passage 71 and the second main passage 72, which will be described later, may pass through the gas chamber 52 together with each other.

Also, the main passage 70 may have a sectional area less than that of the gas chamber 52. In more detail, the first main passage 71 and the second main passage 72, which will be described later, may have a sectional area less than that of the gas chamber 52. Thus, the gas chamber 52 may have an approximately torus shape or donut shape.

Thus, when compared with a structure in which the main passage 70 is disposed outside the gas chamber 52, the fermenter 1 may be compact.

The main passage 70 may include a first main passage 71 and a second main passage 72.

The first main passage 71 may be disposed to be spaced apart from the first gas passage 51 in the fermentation container 10. In more detail, the first main passage 71 may be provided in a pack body 21 of a beverage making pack 20.

The first main passage 71 may be disposed inside the first gas passage 51 in a diameter direction of the fermentation container 10. That is, the first gas passage 51 may be disposed on an outer circumference of the first main passage 71 and the fermentation container 10.

The second main passage 72 may be disposed to be spaced apart from the second gas passage 53 in the fermentation lid 40. The second main passage 72 may include a vertical part 72A lengthily disposed in a vertical direction and a horizontal part 72B lengthily disposed in a horizontal direction when the fermentation lid 40 closes the fermentation container 10. However, this example is not limited thereto. For example, the second main passage 72 may vary in shape as necessary. For example, the second main passage 72 may have a curved tube shape or be provided with only the vertical part.

The vertical part 72A of the second main passage 72 may be disposed inside the vertical part 53A of the second gas passage 53 in a diameter direction of the fermentation lid 40. That is, the vertical part 53A of the second gas passage 53 may be disposed on an outer circumference of the vertical part 72A of the second main passage 72 and the fermentation lid 40.

When the fermentation lid 40 closes the fermentation container 10, the second main passage 72 may communicate with the first main passage 71. In more detail, the vertical part 72A of the second main passage 72 may communicate with the first main passage 71.

The first main passage 71 and the second main passage 72, which communicate with each other, may constitute the main passage 70 together with each other.

When the fermentation lid 40 closes the fermentation container 10, each of the first main passage 71 and the second main passage 72 may have a sectional area less than that of each of the first gas passage 51 and the second gas passage 53 so that the first main passage 71 and the second main passage 72 are easily connected to each other.

The second main passage 72 may extend to the outer circumference of the fermentation lid 40 or be provided in only the inside of the fermentation lid 40. In addition, the second main passage 72 may be connected to a separate external passage 4. Hereinafter, a structure in which the second main passage 72 is connected to the external passage 4 will be described as an example.

A connection part 4A between the external passage 4 and the second main passage 72 may be disposed on the outer circumference of the fermentation lid 40 as illustrated in Figs. 4 to 6. However, this example is not limited thereto. For example, the external passage 4 may be inserted into the fermentation lid 40 and connected to the second main passage 72. In this case, the connection part 4A between the external passage 4 and the second main passage 72 may be disposed inside the fermentation lid 40.

The external passage 4 may be connected to at least one constituent that is required for making a beverage. The constituents may be disposed outside the fermenter 1. For example, the external passage 4 may be branched to be connected to each of a water supply part 5, a dispensing part 6, and a material supply part 7.

The water supply part 5 may be configured to supply water to the fermentation space S1 of the fermenter 1 and include a water tank. The water supply part 5 may directly supply water.

The dispensing part 6 may be configured to dispense a beverage that is fermented in the fermentation space S1 of the fermenter 1 and then completely made and include a dispenser or a tap.

The material supply part 7 may be configured to supply a material that is required for the fermentation of the beverage. When the beverage made in the fermenter 1 is beer, the material may be malt, wort, hop, oil, yeast, and the like. In addition, the material supply part 7 may supply the material that is mixed with water.

As illustrated in Fig. 5, when a fluid such as water or a mixture is introduced into the fermenter 1, the water supply part 5 and/or the material supply part 7 may guide the fluid to the fermenter 1 through the external passage 4. Thus, the fluid may successively pass through the second main passage 72 and the first main passage 71 and then be introduced into the fermentation space S1.

When the beverage made as illustrated in Fig. 6 is dispensed from the fermentation space S1 through the external passage 4, the beverage may successively pass through the first main passage 71 and the second main passage 72 to flow to the external passage and then be dispensed through the dispensing part 6.

Also, inner hollow parts 24 and 44 may be provided in at least one of the beverage making pack 20 and the fermentation lid 40. Hereinafter, a structure in which the inner hollow parts 24 and 44 are respectively defined in the beverage making pack 20 and the fermentation lid 40 will be described as an example for convenience of description.

The container-side inner hollow part 24 may be defined in the beverage making pack 20, and a lid-side inner hollow part 44 may be defined in the fermentation lid 40. The container-side inner hollow part 24 may protrude upward, and the lid-side inner hollow part 44 may protrude downward. The container-side inner hollow part 24 and the lid-side inner hollow part 44 may be disposed at positions corresponding to each other.

The container-side inner hollow part 24 may be disposed inside the container-side hollow part 23 in a radial direction of the fermentation container 10. The lid-side inner hollow part 44 may be disposed inside the lid-side hollow part 43 in a radial direction of the fermentation lid 40.

The first main passage 71 may include an inner space of the container-side inner hollow part 24, and the second main passage 72 may include an inner space of the lid-side inner hollow part 44.

When the fermentation lid 40 closes the fermentation container 10, the container-side inner hollow part 24 and the lid-side inner hollow part 44 may come into contact with each other or overlap each other in the vertical direction. However, this example is not limited thereto. When the fermentation lid 40 closes the fermentation container 10, an outer circumferential surface of the lid-side inner hollow part 44 and an inner circumferential surface of the container-side inner hollow part 24 may come into contact with each other.

The fermenter 1 according to this example may further include a sealing 62 that prevents the fluid flowing to the main passage 70 from leaking between the first main passage 71 and the second main passage 72. The fluid passing through the main passage 70 may be prevented from leaking into the gas chamber 52 by the sealing 62.

For a clear distinction, the sealing 61 preventing the gas within the gas chamber 52 from leaking to the outside may be called a gas sealing, and the sealing 62 preventing the fluid flowing to the main passage 70 from leaking to the gas chamber 52 may be called a fluid sealing.

The fluid sealing 62 may be made of a material having elasticity such as rubber, like the gas sealing 61.

The fluid sealing 62 may be provided on at least one of the container-side inner hollow part 24 and the lid-side inner hollow part 44.

When the fermentation lid 40 closes the fermentation container 10, the fluid sealing 62 may be compressed between the container-side inner hollow part 24 and the lid-side inner hollow part 44 to improve a sealing effect.

Hereinafter, an operation of the fermenter 1 according to this example will be described.

The user may open the fermentation lid 40 to put the beverage making pack 20 into the opening 31 of the fermentation tank 30 and then close the fermentation lid 40 to close the fermentation container 10. Thereafter, the fluid within the water supply part 5 and the material supply part 7 may be introduced into the fermenter 1 through the external passage 4 to successively pass through the second main passage 72 and the first main passage 71. Then, the fluid may be introduced into the fermentation space S1 to start the fermentation.

As the fermentation progresses, the gas may be generated in the fermentation space S1 within the beverage making pack 20. Thus, the inner pressure of the fermentation space S1 may gradually increase to expand the pack container 22 and thereby to reach an appropriate level of inner pressure.

If the gas is continuously generated even though the inner pressure of the fermentation space S1 reaches the appropriate level, the gas may be introduced into the gas chamber 52 through the first gas passage 51, and the gas within the gas chamber 52 may be discharged to the outside of the fermenter 1 through the second gas passage 53.

If the second gas passage 53 is connected to the external gas passage 2, when a gas discharge valve 3 is opened, the gas passing through the second gas passage 53 may be guided to the external gas passage 2 and then discharged.

When the fermentation is finished to completely make the beverage, the user may dispense the beverage. The beverage contained in the fermentation space S1 may successively pass through the first main passage 71 and the second main passage 72 to flow to the external passage 4 and then be dispensed through the dispensing part 6.

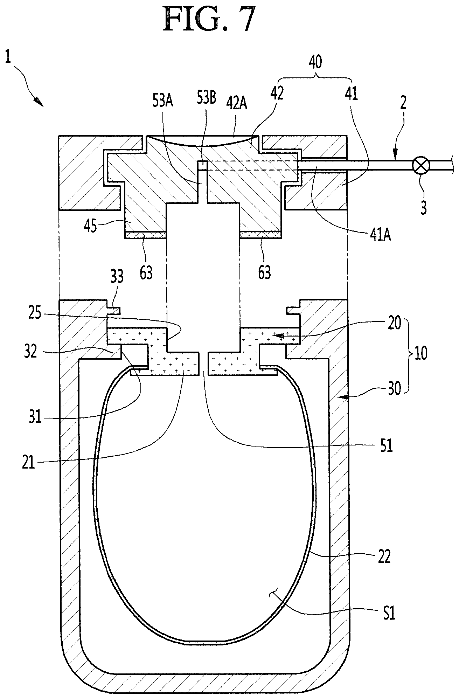

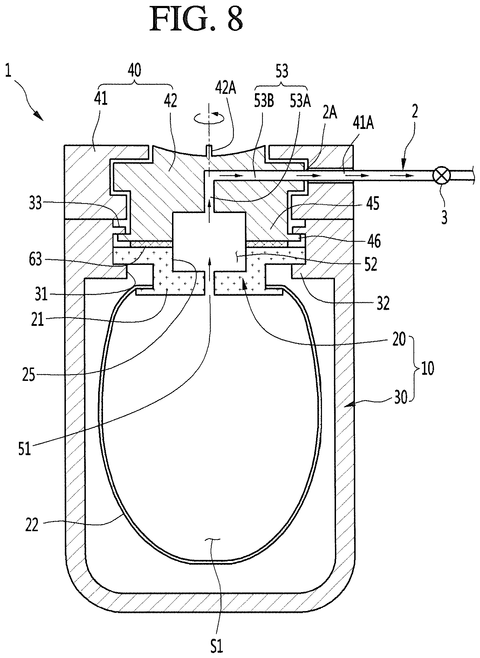

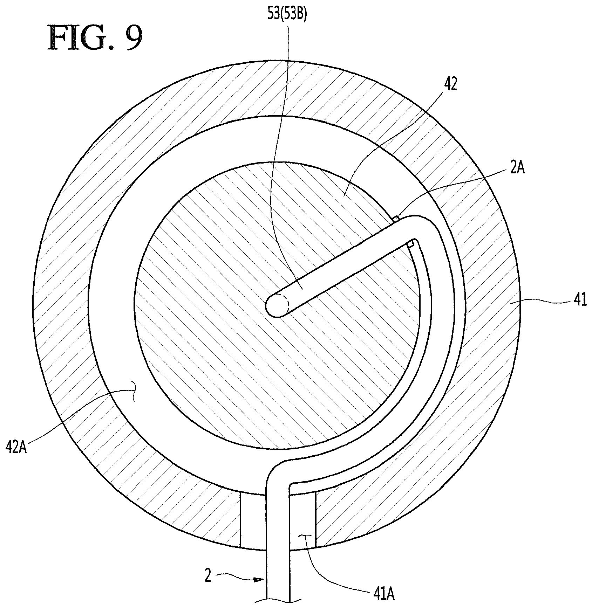

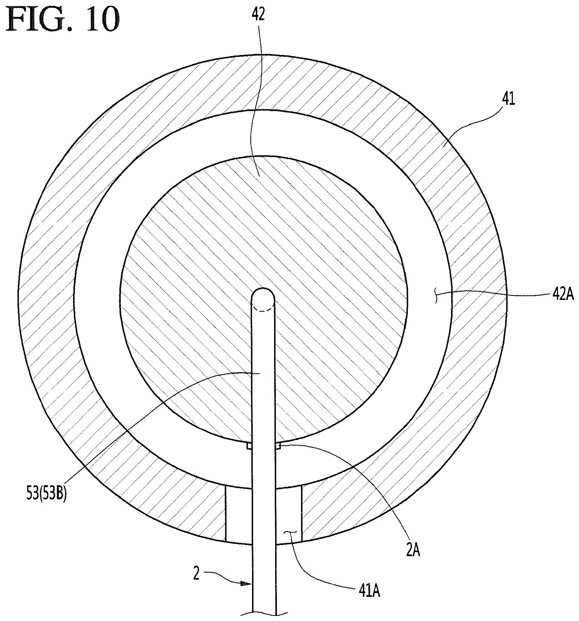

Fig. 7 is a cross-sectional view illustrating a state in which a fermentation lid of a fermenter is opened according to a third example, Fig. 8 is a view illustrating a flow of a gas discharged through a gas passage when the fermentation lid of Fig. 7 is closed and locked, Fig. 9 is a transverse cross-sectional view illustrating a state in which the fermentation lid of a fermenter of Fig. 7 is unlocked, and Fig. 10 is a transverse cross-sectional view illustrating a state in which the fermentation lid of the fermenter of Fig. 7 is locked.

Hereinafter, a fermenter according to a third example will be described with reference to Figs. 7 to 10. Contents duplicated with the foregoing first example will be omitted, and differences will be mainly described.

A fermentation lid according to this example may include an outer lid 41 and an inner lid 42.

The outer lid 41 may be seated on the fermentation container 10.

The outer lid 41 may be configured to surround at least a portion of an outer circumferential surface of the inner lid 42.

The inner lid 42 may be rotatably disposed with respect to the outer lid 41. The outer lid 41 may be configured to restrict the inner lid 42 in a vertical direction. A second gas passage 53 may be provided in the inner lid 42.

A handle 42A may be disposed on an upper portion of the inner lid 42. The user may grasp the handle 42A to rotate the inner lid 42 in a clockwise direction or a counterclockwise direction.

As described above, a hollow part or a recess part may be defined in at least one of the beverage making pack 20 and the fermentation lid 40, and an inner space of the hollow part or the recess part may define a gas chamber 52. Hereinafter, a recess part 25 may be defined in the beverage making pack 20, and a hollow part 45 may be defined in the fermentation lid 40.

The hollow part 45 protruding downward may be defined in the inner lid 42 of the fermentation lid 40. Also, the recess part 25 recessed downward may be defined in a top surface of the beverage making pack 20. The hollow part 45 and the recess part 25 may be disposed in positions corresponding to each other.

When the fermentation lid 40 closes the fermentation container 10, the hollow part 45 of the fermentation lid 40 may come into contact with the top surface of the beverage making pack 20 or vertically overlap the beverage making pack 20. However, this example is not limited thereto. When the fermentation lid 40 closes the fermentation container 10, an outer circumferential surface of the hollow part 45 and an inner circumferential surface of the recess part 25 may come into contact with each other.

When the fermentation lid 40 closes the fermentation container 10, the gas chamber 52 may be disposed between the inner lid 42 and the fermentation container 10. In more detail, the inner space of the hollow part 45 of the fermentation lid 40 and the inner space of the recess part 25 of the beverage making pack 20 may constitute the gas chamber 52 together with each other.

The second gas passage 53 may be provided in the inner lid 42 of the fermentation lid 40. Thus, when the outer lid 41 and the inner lid 42 close the fermentation container 10, the gas chamber 52 may be disposed between the fermentation container 10 and the inner lid 42.

A through-hole 41A may be defined in the outer lid 41. An external gas passage 2 may be inserted into the through-hole 41A to communicate with a second gas passage 53 of the inner lid 42.

A predetermined gap 42A may be defined between an inner circumference of the outer lid 41 and an outer circumference of the inner lid 42. At least a portion of the external gas passage 2 may be inserted into the gap 42A. Thus, the connection between the external gas passage 2 and the second gas passage 53 may be maintained to easily rotate the inner lid 42.

A connection part 2A between the external gas passage 2 and the second gas passage 53 may be disposed on the outer circumference of the inner lid 42 as illustrated in Figs. 8 to 10. However, this example is not limited thereto. For example, the external gas passage 2 may be inserted into the inner lid 42 and connected to the second gas passage 53. In this case, the connection part 2A between the external gas passage 2 and the second gas passage 53 may be disposed inside the inner lid 42.

The through-hole 41A of the outer lid 41 may be defined in a position corresponding to an outlet of the second gas passage 53 when the inner lid 42 rotates to be in a locked state. Thus, a connection part 2A between the second gas passage 53 and the external gas passage 2 may be closest to the through-hole 41A when the fermentation lid 40 is in the locked state.

A locking part 46 coupled to the fermentation container 10 when the inner lid 42 rotates in one direction (for example, the clockwise direction) may be disposed on the inner lid 42 of the fermentation lid 40.

The locking part 46 may protrude outward from an outer circumferential surface of the inner lid 42. In more detail, the hollow part 45 may protrude downward from the inner lid 42, and the locking part 46 may protrude outward from an outer circumferential surface of the hollow part 45.

A hook part 33 restricting the locking part 46 may be disposed on the fermentation container 10. The hook part 33 may be disposed on the fermentation tank 30 to protrude inward from an inner circumference of an upper portion of the fermentation tank 30. The hook part 33 may be disposed above an opening 31 and a support part 32.

The locking part 46 may be provided in plurality. Each of the locking parts 46 may lengthily extend in a circumferential direction of the outer circumferential surface of the inner lid 42. Also, the hook part 33 may be provided in plurality. Each of the hook parts 33 may lengthily extend along an inner circumference of the fermentation tank 30.

Each of the locking parts 46 may have a length less than a gap between one hook part 33 and the other hook part 33. That is, each of the locking parts 46 may have a length that is enough to pass through the gap between one hook part 33 and the other hook part 33 in a vertical direction.

When the fermenter 1 is in a locked state, the locking part 46 of the fermentation lid 40 may be disposed below the hook part 33 of the fermentation container 10 to restrict the fermentation lid 40 in the vertical direction so that the fermentation lid 40 is not opened.

In the locked state, when the inner lid 42 rotates in the other direction (for example, the counterclockwise direction), the fermenter 1 may be unlocked. In this case, the locking part 46 may be separated downward from the hook part 33 to face the gap between the one hook part 33 and the other hook part 33. That is, the fermentation lid 40 may not be restricted in the vertical direction. In this state, when the fermentation lid 40 moves upward, the locking part 46 may pass through the gap between one hook part 33 and the other hook part 33 and thus be completely separated from the fermentation container 10.

A sealing 63 preventing a gas within the gas chamber 52 from leaking between the inner lid 42 and the fermentation container 10 may be disposed on at least one of the inner lid 42 and the fermentation container 10.

When the fermentation lid 40 closes the fermentation container 10, the sealing 63 may be compressed between the inner lid 42 and a top surface of the beverage making pack 20. In addition, a separate sealing (not shown) that is compressed between the fermentation tank 30 and the outer lid 41 of the fermentation lid 40 may be further provided.

Hereinafter, an operation of the fermenter 1 according to this example will be described.

The user may open the fermentation lid 40 to put the beverage making pack 20 into the opening 31 of the fermentation tank 30. Here, a fermentation material may be contained in the beverage making pack 20. Thereafter, the user may close the fermentation lid 40.

While the fermentation lid 40 is closed, the locking part 46 of the fermentation lid 40 may move downward to pass through the gap between one hook part 33 and the other hook part 33 of the fermentation container 10. The fermenter 1 may still be in the unlocked state.

Thereafter, the user may grasp the handle 42A to rotate the inner lid 42, the locking part 46 may move downward from the hook part 33 and then hooked with the hook part 33 in an upward direction. Thus, the fermenter 1 may become the locked state, and the fermentation container 10 may be completely closed. Thereafter, the fermentation may start.

As the fermentation progresses, the gas may be generated in the fermentation space S1 within the beverage making pack 20. Thus, the inner pressure of the fermentation space S1 may gradually increase to expand the pack container 22 and thereby to reach an appropriate level of inner pressure.

If the gas is continuously generated even though the inner pressure of the fermentation space S1 reaches the appropriate level, the gas may be introduced into the gas chamber 52 through the first gas passage 51, and the gas within the gas chamber 52 may be discharged to the outside of the fermenter 1 by successively passing through the second gas passage 53 and the external gas passage 2.

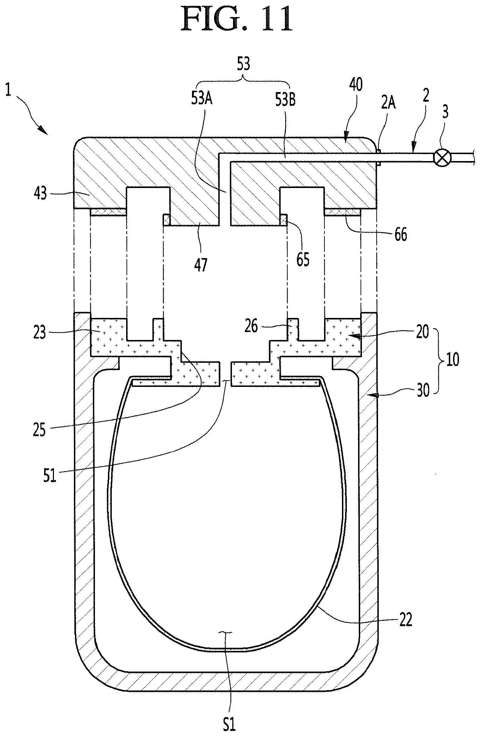

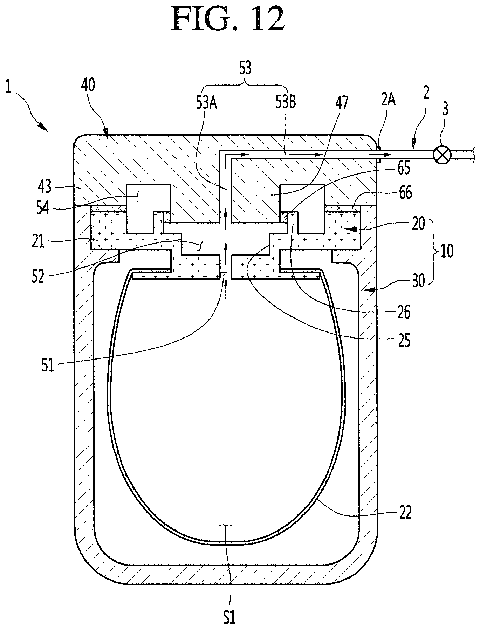

Fig. 11 is a cross-sectional view illustrating a state in which a fermentation lid of a fermenter is opened according to a first embodiment of the invention, and Fig. 12 is a view illustrating a flow of a gas discharged through a gas passage when the fermentation lid of the fermenter of Fig. 11 is closed.

Hereinafter, a fermenter according to the first embodiment will be described with reference to Figs. 11 and 12. Contents duplicated with the foregoing first embodiment will be omitted, and differences will be mainly described.

A grasp part 26 protruding upward is disposed on the beverage making pack 20 of the fermenter 1 according to this embodiment. The user may grasp the grasp part 26 to easily mount or separate the beverage making pack 20 on/from the fermentation tank 30.

A portion, which disposed inside a container-side hollow part 23, of a top surface of the beverage making pack 20 may protrude upward to form the grasp part 26. That is, at least a portion of the grasp part 26 is disposed inward rather than the container-side hollow part 23.

The grasp part 26 may have a hollow shape. When the fermentation lid 40 closes the fermentation container 10, an inner space of the grasp part 26 may be included in a gas chamber 52 or communicate with the gas chamber 52.

Like the foregoing third example, a recess part 25 may be defined in the beverage making pack 20. A portion, which disposed inside the grasp part 26, of the top surface of the beverage making pack 20 may be recessed downward to form the recess part 25. That is, the inner space of the grasp part 26 and the inner space of the recess part 25 may communicate with each other and be covered by a protrusion 47 of the fermentation lid 40 to form the gas chamber 52.

The protrusion 47 protruding downward is disposed on the fermentation lid 40. A portion, which disposed inside a lid-side hollow part 43, of a bottom surface of the fermentation lid 40 may protrude downward to form the protrusion 47. That is, at least a portion of the protrusion 47 is disposed inside the lid-side hollow part 43.

When the fermentation lid 40 closes the fermentation container 10, the protrusion 47 may cover the inner space of the grasp part 26 to form the gas chamber 52.

At least a portion of the second gas passage 53 may be disposed in the protrusion 47.

The grasp part 26 of the beverage making pack 20 and the protrusion 47 of the fermentation lid 40 may be disposed at positions corresponding to each other.

When the fermentation lid 40 closes the fermentation container 10, at least a portion of the protrusion 47 of the fermentation lid 40 may be inserted into the grasp part 26 of the beverage making pack 20. However, this embodiment is not limited thereto. When the fermentation lid 40 closes the fermentation container 10, the bottom surface of the protrusion 47 may come into contact with the top surface of the grasp part 26.

When the fermentation lid 40 closes the fermentation container 10, a buffer space 54 is defined between the beverage making pack 20 and the fermentation lid 40.

The buffer space 54 is disposed outside the grasp part 26 and spaced apart from the gas chamber 52.

The buffer space 54 may be a space that is separated from the gas chamber 52 to perform a function that immediately holds the gas to prevent the gas from leaking to the outside of the fermenter 1 even though the gas within the gas chamber 52 leaks.

A space between the lid-side hollow part 43 and the protrusion 47 of the fermentation lid 40 and a space between the container-side hollow part 23 and the grasp part 26 of the beverage making pack 20 form the buffer space 54 together with each other. Thus, the buffer space may have an approximately donut shape or torus shape.

The gas chamber 52 may be called a first space, and the buffer space 54 may be called a second space.

The fermenter 1 according to this embodiment may further include a first sealing 65 preventing the gas within the gas chamber 52 from leaking to the buffer space 54 and a second sealing 66 preventing the gas within the buffer space 54 from leaking to the outside.

Each of the first sealing 65 and the second sealing 66 may be made of a material having elasticity such as rubber.

Each of the first sealing 65 and the second sealing 66 may be disposed on at least one of the fermentation lid 40 and the fermentation container 10.

In more detail, the first sealing 65 may be disposed on at least one of the grasp part 26 and the protrusion 47, and the second sealing 66 may be disposed on at least one of the container-side hollow part 23 and the lid-side hollow part 43.

In more detail, the first sealing 47 may be compressed between an outer circumferential surface of the protrusion 47 and an inner circumferential surface of the grasp part 26 to perform sealing, and the second sealing 66 may be compressed between a bottom surface of the lid-side hollow part 43 and a top surface of the container-side hollow part 23 to perform sealing. However, this embodiment is not limited to the position of each of the sealings 65 and 66. For example, the position of the sealing may vary according to the coupling relationship between the fermentation lid 40 and the fermentation container 10.

The sealing effect of the fermenter 1 may be doubly improved by the first sealing 65 and the second sealing 66.

In addition, the buffer space 54 may be disposed between the first sealing 65 and the second sealing 66 in a direction in which the gas leaks. Thus, the sealing effect of the fermenter 1 may be more improved.

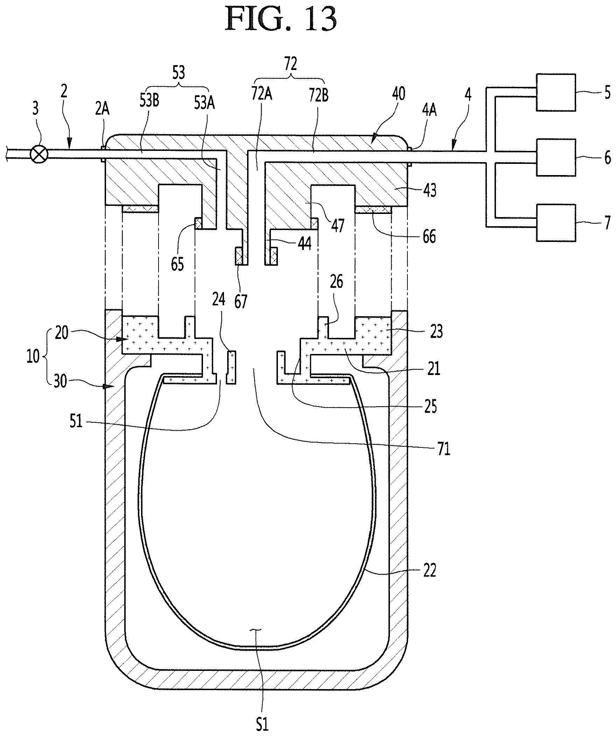

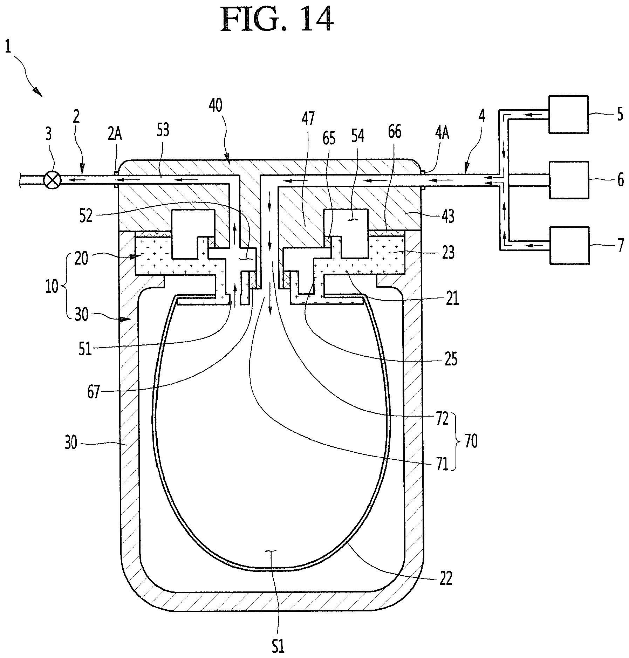

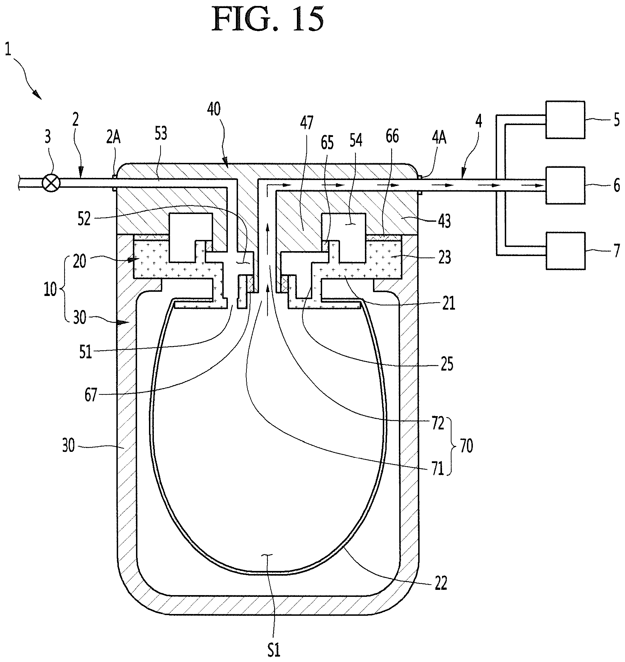

Fig. 13 is a cross-sectional view illustrating a state in which a fermentation lid of a fermenter is opened according to a second embodiment of the invention, Fig. 14 is a view illustrating a flow of a fluid introduced through a main passage and a flow of a gas discharged through a gas passage when the fermentation lid of the fermenter of Fig. 13 is closed, and Fig. 15 is a view illustrating a flow of a beverage dispensed through the main passage when the fermentation lid of the fermenter of Fig. 13 is closed.

Hereinafter, a fermenter according to this embodiment will be described with reference to Figs. 13 to 15. The fermenter according to this embodiment is the same as that according to the first example except for a main passage 70 and constituents related to the main passage 70, and thus, their duplicated description will be omitted, and differences will be mainly described.

A first main passage 71 spaced apart from the first gas passage 51 may be further provided in a beverage making pack 20 of the fermenter 1 according to this embodiment, and a second main passage spaced apart from the second gas passage 53 may be further provided in a fermentation lid 40.

When the fermentation lid 40 closes the fermentation container 10, the first main passage 71 and the second main passage 72 may communicate with each other and constitute a main passage 70 together with each other. Since the constituents and operation of the main passage 70 were described in detail in the foregoing second example, its duplicated description will be omitted.

Like the second example, inner hollow parts 24 and 44 may be respectively provided in the beverage making pack 20 and the fermentation lid 40 in this embodiment.

A container-side inner hollow part 24 may be provided in the beverage making pack 20. The container-side inner hollow part 24 may protrude upward from a bottom surface of a recess part 25. That is, at least a portion of the container-side inner hollow part 24 may be disposed inside the recess part 25.

A lid-side inner hollow part 44 may be provided in the fermentation lid 40. The lid-side inner hollow part 44 may protrude downward from a bottom surface of a protrusion 47.

The container-side inner hollow part 24 and the lid-side inner hollow part 44 may be disposed at positions corresponding to each other.

The first main passage 71 may include an inner space of the container-side inner hollow part 24, and the second main passage 72 may include an inner space of the lid-side inner hollow part 44.

When the fermentation lid 40 closes the fermentation container 10, at least a portion of the lid-side inner hollow part 44 may be inserted into the container-side inner hollow part 24. However, this embodiment is not limited thereto. When the fermentation lid 40 closes the fermentation container 10, a bottom surface of the lid-side inner hollow part 44 may come into contact with a top surface of the container-side inner hollow part 24.

The fermenter 1 according to this embodiment may further include a third sealing 67 sealing a gap between the first main passage 71 and the second main passage 72 in addition to the first sealing 65 and the second sealing 66.

The third sealing 67 may prevent a fluid flowing to the main passage 70 from leaking between the first main passage 71 and the second main passage 72.

The third sealing 67 may be made of a material having elasticity such as rubber.

The third sealing 67 may be provided on at least one of the container-side inner hollow part 24 and the lid-side inner hollow part 44.

In more detail, the third sealing 67 may be compressed between an outer circumferential surface of the lid-side inner hollow part 44 and an inner circumferential surface of the container-side inner hollow part 24 to perform sealing. However, this embodiment is not limited to the position of the third sealings 67. For example, the position of the third sealing 67 may vary according to the coupling relationship between the fermentation lid 40 and the fermentation container 10.

According to an embodiment of the present disclosure, since the gas chamber communicates with each of the first gas passage and the second gas passage, the gas generated during the fermentation may be easily discharged even though the first gas passage and the second gas passage do not correspond to each other.

Also, although the number of first gas passage and the number of second gas passage are different from each other, the gas may be easily discharged by the gas chamber.

Also, the sealing may be provided to prevent the gas within the gas chamber from leaking between the fermentation lid and the fermentation container.

Also, the fluid may be introduced into or discharged from the fermenter through the main passage.

Also, when the fermentation lid closes the fermentation container, since the first main passage and the second main passage communicate with each other, it may be possible to induce the user to use the fermenter properly.

Also, since at least a portion of the main passage is disposed in the gas chamber, the fermenter may be more compact when compared to the structure in which the main passage is disposed outside the gas chamber.

Also, the sealing may be provided to prevent the fluid flowing to the main passage from leaking between the first main passage and the second main passage.

Also, the fermentation lid may include the outer lid and the inner lid, and the locking part may be provided on the inner lid. Thus, the user may rotate the fermentation lid to be locked.

Also, the grasp part may be disposed on the beverage making pack to allow the user to grasp the grasp part, thereby inserting and separating the beverage making pack into/from the fermentation tank.

Also, when the fermentation lid closes the fermentation container, the buffer space may be provided between the beverage making pack and the fermentation lid. Thus, even though the gas within the gas chamber leaks, the gas may not directly leak to the outside but be held in the buffer space.

Also, the first sealing may prevent the gas within the gas chamber from leaking, and the second sealing may prevent the gas within the buffer space from leaking to improve the sealing effect of the fermenter.

## Claims

1. A fermenter (1) comprising:
a fermentation container (10) having a fermentation space (S1) in which a beverage is fermented and a first gas passage (51) communicating with the fermentation space (S1); and
a fermentation lid (40) opening and closing the fermentation container and having a second gas passage (53),
wherein the fermentation container (10) comprises:
a fermentation tank (30) having an opening opened and closed by the fermentation lid (40); and
a beverage making pack (20) having the fermentation space (S1) and the first gas passage (51), and being inserted into the fermentation tank (30) through the opening;
wherein a gas chamber (52) is provided between the beverage making pack (20) and the fermentation lid (40), and communicates with each of the first gas passage (51) and the second gas passage (53) , and the first gas passage (51), the gas chamber (52) and the second gas passage (53) constitute a gas passage through which the gas generated in the fermentation space (S1) can be discharged to the outside of the fermenter,
wherein the gas chamber (52) has a sectional area greater than that of each of the first gas passage (51) and the second gas passage (53),
wherein a container-side hollow part (23) protruding upward is defined in the beverage making pack (20), and a lid-side hollow part (43) protruding downward is defined in the fermentation lid (40),
wherein a grasp part (26) protruding upward is disposed on the beverage making pack (20), a portion of the grasp part (26) is disposed inside the container-side hollow part (23),
wherein a protrusion (47) protruding downward is disposed on the fermentation lid (40), at least a portion of the protrusion (47) is disposed inside the lid-side hollow part (43),
wherein an inner space of the grasp part (26) is provided in the gas chamber (52) or communicates with the gas chamber (52),
wherein, when the fermentation lid (40) closes the opening, a buffer space (54) is defined between the beverage making pack (20) and the fermentation lid (40), and
the buffer space (54) is disposed outside the grasp part (26) and spaced apart from the gas chamber (52),
a space between the lid-side hollow part (43) and the protrusion (47) and a space between the container-side hollow part (23) and the grasp part (26) form the buffer space (54) together with each other.

2. The fermenter of claim 1, wherein a plurality of first gas passages are provided in the fermentation container (10) .

3. The fermenter of claim 1 or 2, wherein a first main passage (71) communicating with the fermentation space (S1) is further provided in the beverage making pack (20), the first main passage (71) is spaced apart from the first gas passage (51), and
when the fermentation lid (40) closes the fermentation container (10), a second main passage (72) communicating with the first main passage (71) is further provided in the fermentation lid (40), the second main passage (72) being spaced apart from the second gas passage (53).

4. The fermenter of claim 3, wherein each of the first main passage (71) and the second main passage (72) has a sectional area greater than that of each of the first gas passage (51) and the second gas passage (53) and less than that of the gas chamber (52).

5. The fermenter of claim 3 or 4, further comprising a fluid sealing (67) preventing a fluid flowing to the main passage (71) from leaking between the first main passage (71) and the second main passage (72),
wherein the fluid sealing (67) is provided on at least one of the fermentation lid (40) and the fermentation container (10).

6. The fermenter of any one of claims 3 to 5, wherein the first gas passage (51) is disposed between the first main passage (71) and an outer circumference of the fermentation container (10).

7. The fermenter of any one of claims 3 to 6, wherein each of the second gas passage (53) and the second main passage (72) comprises a vertical part that is lengthily disposed in a vertical direction, and
the vertical part of the second gas passage (53) is disposed between the vertical part of the second main passage (72) and an outer circumference of the fermentation lid (40).

8. The fermenter of claim 1, further comprising:
a first sealing (65) preventing a gas within the gas chamber (52) from leaking to the buffer space (54); and
a second sealing (66) preventing a gas within the buffer space (54) from leaking to the outside,
wherein each of the first sealing (65) and the second sealing (66) is disposed on at least one of the beverage making pack (20) and the fermentation lid (40).

## Patentansprüche

1. Fermenter (1), der aufweist:
einen Fermentationsbehälter (10), der einen Fermentationsraum (S1), in dem ein Getränk fermentiert wird, und einen ersten Gaskanal (51) aufweist, der mit dem Fermentationsraum (S1) in Verbindung steht; und
einen Fermentationsdeckel (40), der den Fermentationsbehälter öffnet und schließt und einen zweiten Gaskanal (53) aufweist,
wobei der Fermentationsbehälter (10) aufweist:
einen Fermentationstank (30), der eine Öffnung aufweist, die durch den Fermentationsdeckel (40) geöffnet und geschlossen wird; und
ein Getränkezubereitungspack (20), das den Fermentationsraum (S1) und den ersten Gaskanal (51) aufweist und durch die Öffnung in den Fermentationstank (30) eingesetzt wird; wobei zwischen dem Getränkezubereitungspack (20) und dem Fermentationsdeckel (40) eine Gaskammer (52) vorgesehen ist und jeweils mit dem ersten Gaskanal (51) und dem zweiten Gaskanal (53) in Verbindung steht, und der erste Gaskanal (51), die Gaskammer (52) und der zweite Gaskanal (53) einen Gaskanal bilden, durch den das im Fermentationsraum (S1) erzeugte Gas zum Äußeren des Fermenters abgelassen werden kann,
wobei die Gaskammer (52) eine größere Querschnittsfläche als jeweils der erste Gaskanal (51) und der zweite Gaskanal (53) aufweist,
wobei ein behälterseitiger hohler Teil (23), der nach oben vorsteht, im Getränkezubereitungspack (20) definiert ist, und eine deckelseitiger hohler Teil (43), der nach unten vorsteht, im Fermentationsdeckel (40) definiert ist,
wobei ein Griffteil (26), der nach oben vorsteht, am Getränkezubereitungspack (20) angeordnet ist, wobei ein Abschnitt des Griffteils (26) innerhalb des behälterseitigen hohlen Teils (23) angeordnet ist,
wobei ein Vorsprung (47), der nach unten vorsteht, am Fermentationsdeckel (40) angeordnet ist, wobei mindestens ein Abschnitt des Vorsprungs (47) innerhalb des deckelseitigen hohlen Teils (43) angeordnet ist,
wobei ein Innenraum des Griffteils (26) in der Gaskammer (52) vorgesehen ist oder mit der Gaskammer (52) in Verbindung steht,
wobei, wenn der Fermentationsdeckel (40) die Öffnung verschließt, ein Pufferraum (54) zwischen dem Getränkezubereitungspack (20) und dem Fermentationsdeckel (40) definiert ist, und
der Pufferraum (54) außerhalb des Griffteils (26) angeordnet ist und von der Gaskammer (52) beabstandet ist,
ein Raum zwischen dem deckelseitigen hohlen Teil (43) und dem Vorsprung (47) und ein Raum zwischen dem behälterseitigen hohlen Teil (23) und dem Griffteil (26) miteinander zusammen den Pufferraum (54) bilden.

2. Fermenter nach Anspruch 1, wobei mehrere erste Gaskanäle im Fermentationsbehälter (10) vorgesehen sind.

3. Fermenter nach Anspruch 1 oder 2, wobei ein erster Hauptkanal (71), der mit dem Fermentationsraum (S1) in Verbindung steht, ferner im Getränkezubereitungspack (20) vorgesehen ist, wobei der erste Hauptkanal (71) vom ersten Gaskanal (51) beabstandet ist, und
wenn der Fermentationsdeckel (40) den Fermentationsbehälter (10) verschließt, ein zweiter Hauptkanal (72), der mit dem ersten Hauptkanal (71) in Verbindung steht, ferner im Fermentationsdeckel (40) vorgesehen ist, wobei der zweite Hauptkanal (72) vom zweiten Gaskanal (53) beabstandet ist.

4. Fermenter nach Anspruch 3, wobei jeweils der erste Hauptkanal (71) und der zweite Hauptkanal (72) eine Querschnittsfläche aufweisen, die jeweils größer als die des ersten Gaskanals (51) und des zweiten Gaskanals (53) und kleiner als die der Gaskammer (52) ist.

5. Fermenter nach Anspruch 3 oder 4, der ferner eine Fluiddichtung (67) aufweist, die verhindert, dass ein zum Hauptkanal (71) strömendes Fluid zwischen dem ersten Hauptkanal (71) und dem zweiten Hauptkanal (72) austritt,
wobei die Fluiddichtung (67) an mindestens einem des Fermentationsdeckels (40) und des Fermentationsbehälters (10) vorgesehen ist.

6. Fermenter nach einem der Ansprüche 3 bis 5, wobei der erste Gaskanal (51) zwischen dem ersten Hauptkanal (71) und einem Außenumfang des Fermentationsbehälters (10) angeordnet ist.

7. Fermenter nach einem der Ansprüche 3 bis 6, wobei jeweils der zweite Gaskanal (53) und der zweiten Hauptkanal (72) einen vertikalen Teil aufweisen, der der Länge nach in einer vertikalen Richtung angeordnet ist, und
der vertikale Teil des zweiten Gaskanals (53) zwischen dem vertikalen Teil des zweiten Hauptkanals (72) und einem Außenumfang des Fermentationsdeckels (40) angeordnet ist.

8. Fermenter nach Anspruch 1, der ferner aufweist:
eine ersten Dichtung (65), die verhindert, dass ein Gas innerhalb der Gaskammer (52) aus dem Pufferraum (54) austritt; und
eine zweite Dichtung (66), die verhindert, dass ein Gas innerhalb des Pufferraums (54) nach außen austritt,
wobei jeweils die erste Dichtung (65) und die zweite Dichtung (66) an mindestens einem des Getränkezubereitungspacks (20) und des Fermentationsdeckels (40) angeordnet sind.

## Revendications

1. Fermenteur (1), comprenant :
un récipient de fermentation (10) comportant un espace de fermentation (S1) dans lequel une boisson est fermentée et un premier passage de gaz (51) communiquant avec l'espace de fermentation (S1) ; et
un couvercle de fermentation (40) ouvrant et fermant le récipient de fermentation et comportant un deuxième passage de gaz (53),
où le récipient de fermentation (10) comprend :
un réservoir de fermentation (30) présentant une ouverture libérée et obturée par le couvercle de fermentation (40) ; et
une boîte de préparation de boisson (20) comprenant l'espace de fermentation (S1) et le premier passage de gaz (51), introduite dans le réservoir de fermentation (30) par l'ouverture ;
où une chambre à gaz (52) est prévue entre la boîte de préparation de boisson (20) et le couvercle de fermentation (40), communiquant avec le premier passage de gaz (51) ainsi que le deuxième passage de gaz (53), et où le premier passage de gaz (51), la chambre à gaz (52) et le deuxième passage de gaz (53) forment un passage de gaz par lequel le gaz généré dans l'espace de fermentation (S1) peut être évacué vers l'extérieur du fermenteur, où la chambre à gaz (52) a une surface de section supérieure à celle du premier passage de gaz (51) et à celle du deuxième passage de gaz (53),
où une section creuse côté récipient (23) en saillie vers le haut est définie dans la boîte de préparation de boisson (20), et une section creuse côté couvercle (43) en saillie vers le bas est définie dans le couvercle de fermentation (40),
où une section de préhension (26) en saillie vers le haut est présentée sur la boîte de préparation de boisson (20), une partie de la section de préhension (26) est présentée à l'intérieur de la section creuse côté récipient (23),
où une saillie (47) s'étendant vers le bas est présentée sur le couvercle de fermentation (40), au moins une partie de la saillie (47) est présentée à l'intérieur de la section creuse côté couvercle (43),
où un espace intérieur de la section de préhension (26) est prévu dans la chambre à gaz (52) ou communique avec la chambre à gaz (52),
où, quand le couvercle de fermentation (40) obture l'ouverture, un espace tampon (54) est défini entre la boîte de préparation de boisson (20) et le couvercle de fermentation (40), et
l'espace tampon (54) est disposé à l'extérieur de la section de préhension (26) et espacé de la chambre à gaz (52),
un espace entre la section creuse côté couvercle (43) et la saillie (47) et un espace entre la section creuse côté récipient (23) et la section de préhension (26) forment ensemble l'espace tampon (54).

2. Fermenteur selon la revendication 1, où une pluralité de premiers passages de gaz est prévue dans le récipient de fermentation (10).

3. Fermenteur selon la revendication 1 ou la revendication 2, où un premier passage principal (71) communiquant avec l'espace de fermentation (S1) est en outre prévu dans la boîte de préparation de boisson (20), ledit premier passage principal (71) étant espacé du premier passage de gaz (51), et où,
quand le couvercle de fermentation (40) ferme le récipient de fermentation (10), un deuxième passage principal (72) communiquant avec le premier passage principal (71) est en outre prévu dans le couvercle de fermentation (40), ledit deuxième passage principal (72) étant espacé du deuxième passage de gaz (53).

4. Fermenteur selon la revendication 3, où le premier passage principal (71) ainsi que le deuxième passage principal (72) ont chacun une surface de section supérieure à celle du premier passage de gaz (51) et à celle du deuxième passage de gaz (53) et inférieure à celle de la chambre à gaz (52).

5. Fermenteur selon la revendication 3 ou la revendication 4, comprenant en outre un joint d'étanchéité aux fluides (67) empêchant un fluide s'écoulant vers le passage principal (71) de fuir entre le premier passage principal (71) et le deuxième passage principal' (72), ledit joint d'étanchéité aux fluides (67) étant prévu sur le couvercle de fermentation (40) et/ou le récipient de fermentation (10).

6. Fermenteur selon l'une des revendications 3 à 5, où le premier passage de gaz (51) est présenté entre le premier passage principal (71) et la circonférence extérieure du récipient de fermentation (10).

7. Fermenteur selon l'une des revendications 3 à 6, où le deuxième passage de gaz (53) ainsi que le deuxième passage principal (72) comprennent chacun une partie verticale disposée en longueur dans la direction verticale, et où
la partie verticale du deuxième passage de gaz (53) est disposée entre la partie verticale du deuxième passage principal (72) et la circonférence extérieure du couvercle de fermentation (40).

8. Fermenteur selon la revendication 1, comprenant en outre :
un premier joint (65) empêchant un gaz contenu dans la chambre à gaz (52) de fuir vers l'espace tampon (54) ; et
un deuxième joint (66) empêchant un gaz contenu dans l'espace tampon (54) de fuir vers l'extérieur, le premier joint (65) ainsi que le deuxième joint (66) étant présentés sur la boîte de préparation de boisson (20) et/ou le couvercle de fermentation (40).
